# EUROPEAN PATENT APPLICATION

(11) **EP 2 647 872 A1**
(43) Date of publication of application: **09.10.2013**
(21) Application number: 10860269.9
(22) Date of filing: 03.12.2010
(51) Int. Cl.: F16F 15/134, F16D 13/64, F16F 15/139

(54) **TORSIONAL VIBRATION DAMPING DEVICE**

(71) Applicant: TOYOTA JIDOSHA KABUSHIKI KAISHA, Toyota-shi, Aichi-ken, 471-8571 (JP)
(72) Inventor: TAKENAKA, Tetsuhiro, Toyota-shi Aichi-ken, 471-8571 (JP); KURIMOTO, Tomoyasu, Toyota-shi Aichi-ken, 471-8571 (JP); OKANO, Nobuhiko, Toyota-shi Aichi-ken, 471-8571 (JP); HAGINO, Yasuyuki, Toyota-shi Aichi-ken, 471-8571 (JP); WATARAI, Shinichiro, Toyota-shi Aichi-ken, 471-8571 (JP)
(74) Representative: Kuhnen & Wacker
(86) International application number: PCT/JP2010/007043
(87) International publication number: WO 2012/073291

(57) **Abstract**

Disclosed is a torsional vibration attenuation apparatus that can widen the range of the first rotation member and the second rotation member to suppress the relatively large torsional vibrations, as well as to prevent the first rotation member and the second rotation member from being twisted alternately in the positive side and in the negative side when the first rotation member and the second rotation member are displaced to their neutral positions. The torsional vibration attenuation apparatus 1 comprises a boss 5, a cam member 6 provided on the outer peripheral portion of the boss 5 and rotated integrally with the boss 5 to have a cam surface 6A, and an arm member 19 provided between the cam member 6 and a coil spring 4 and having one end portion held in contact with the cam surface 6A and the other end portion held in engagement with a spring seat 16 of the spring 4 to be swingable around a pin 18 bridged between disc plates 7, 8. The curved surface 6A has a first curvature section to be held in contact with the one end portion of the arm ember 19 when the boss 5 is twisted with respect to the disc plates 7, 8 in the positive side from a neutral position, and a second curvature section to be held in contact with the one end portion of the arm ember 19 when the boss 5 is twisted with respect to the disc plates 7, 8 in the negative side from the neutral position. The first curvature section has a first curvature while the second curvature section having a second curvature, the second curvature being larger than the first curvature.

## Description

### {TECHNICAL FIELD}

The present invention relates to a torsional vibration attenuation apparatus, and more particularly to a torsional vibration attenuation apparatus which comprises a first rotation member and a second rotation member intervening between an internal combustion engine and a drive train, wherein the first rotation member and the second rotation member are relatively rotatably connected with each other through a resilient member to have a rotational torque transmitted between the first rotation member and the second rotation member.

### {BACKGOUND ART}

As a torsional vibration attenuation apparatus of this type, there has so far been known a torsional vibration attenuation apparatus which comprises a drive source such as an internal combustion engine, an electric motor and the like and driven wheels drivably connected with the drive source so that the rotational torque can be transmitted from the drive source to the driven wheels. The conventional torsional vibration attenuation apparatus is adapted to absorb the torsional vibrations between the drive source and a drive train having transmission gear sets.

The known torsional vibration attenuation apparatus is constituted for example by a first rotation member adapted to be selectively coupled with or released from a drive source side flywheel, a driven rotational member connected with an input shaft forming part of a transmission, and a resilient member having the first rotation member and the second rotation member circumferentially resiliently connected with each other (see for example Patent Document 1).

The first rotation member is constituted by a clutch disc, and a pair of disc plates provided radially inwardly of the clutch disc, while the second rotation member is partly constituted by a hub securely connected with the input shaft of the transmission and disposed between the disc plates.

The hub has a cylindrical boss splined to the input shaft and a disc-like flange radially outwardly extending from the cylindrical boss. The resilient member is constituted by a coil spring accommodated in a window hole formed in the flange and having circumferential both end portions supported on the circumferential both ends of the window hole and the circumferential both ends of additional window holes respectively formed in the pair of disc plates.

The known torsional vibration attenuation apparatus previously mentioned is constructed to have the coil spring circumferentially compressed between the clutch disc, the pair of disc plates and the hub when the clutch disc, the pair of disc plates and the hub are relatively rotated with one another, thereby making it possible to absorb and attenuate the torsional vibrations to be inputted to the second rotation member from the first rotation member.

On the other hand, it is well known in the art that there are generated abnormal noises at the idling time of a vehicle, and abnormal noises and muffled noises at the travelling time of the vehicle as transmission side noises generated by the torsional vibrations. It is therefore required to suitably set the torsional property of the torsional vibration attenuation apparatus in order to absorb the torsional vibrations leading to the generation of the above abnormal noises.

Here, the abnormal noises generated at the idling time of the vehicle are known to be constituted by what is called clattering noises, one kind of abnormal noises emitted as being "clattering" caused by the collisions of the gear pairs with no load. Those noises are generally caused by torsional vibrations originated from the rotational fluctuation caused by the torque fluctuation of the drive source at the idling time of the vehicle immediately after the vehicle is speed changed to the neutral.

Further, the abnormal noises generated at the travelling time of the vehicle are known to be constituted partly by what is called chinking noises, one kind of abnormal noises emitted as being "chinking" from the collisions of the slipping gear pairs of the transmission gear sets caused by the torsional vibrations originated from the rotational fluctuation in response to the torque fluctuation of the drive source and caused by the torsional resonance of the drive train during the acceleration and deceleration of the vehicle.

In addition, the muffled noises are known as one kind of abnormal noises to be generated in the passenger room by the vibrations caused by the torsional resonance of the drive train originated from the torque fluctuation of the drive train. The torsional resonance of the drive train is usually caused at the normal travelling operation (for example around 2500 rpm of the rotational speed of the internal combustion engine), so that there is caused muffled noises in the passenger room at the normal travelling operation.

One of the conventional torsional vibration attenuation apparatuses having a torsional property suitably set is known for example by the following Patent Document 2.

The known torsional vibration attenuation apparatus disclosed in the Patent Document 2 comprises a first rotation member integrally rotatable with the internal combustion engine, a second rotation member coaxially and relatively rotatably disposed with the first rotation member, and a displacement member relatively displaced with the second rotation member. The displacement member is formed in the first rotation member and has a contact portion moving along the contacted surface constituted to have the curvature varied in response to the relative rotation angle of the first rotation member and the second rotation member. The relative displacement of the displacement member is performed by the contact portion moving along the contacted surface in response to the relative rotation of the first rotation member and the second rotation member. The known torsional vibration attenuation apparatus further comprises a resilient member suppressed in response to the relative displacement of the displacement member.

The torsional vibration attenuation apparatus is so constituted that when the internal combustion engine is driven, the first rotation member is rotated to transmit the rotational torque to the second rotation member through the resilient member. When the first rotation member and the second rotation member are relatively rotated with each other by the torque fluctuation of the internal combustion engine, the contact portion of the displacement member is moved along the contacted surface, thereby causing a relative displacement of the displacement member with respect to the other of the first rotation member and the second rotation member.

The relative displacement of the displacement member causes the resilient member to be compressed, so that the torque fluctuation of the internal combustion engine is absorbed when the torque is outputted to the second rotation member.

Thus, the relative displacement of the displacement member in response to the torsion angle regulates the compression of the resilient member, thereby making it possible to regulate the torsion property by the displacement member, the contacted surface, and the resilient member.

For this reason, the torsional angle of the first rotation member and the second rotation member can be widened by the resilient member with a low rigidity, thereby making it possible to suppress the clattering noises from being generated by attenuating the vibrations by the low-rigidity resilient member in the small torsional angle area, as seen from the vehicle shifted into the neutral state at the time of the idling state of the vehicle.

Further, in the area where the torsional angle of the first rotation member and the second rotation member is large, the chinking noises can be suppressed from being generated by obtaining the high-rigidity torsion property where the torque can be sharply raised by widening the torsional angle of the first rotation member and the second rotation member.

As a consequence, the torsional vibrations originated from the rotational fluctuation in response to the torque fluctuation of the drive source and the torsional resonance of the drive train can be attenuated, thereby making it possible to suppress the chinking noises caused by the collisions of the slipping gear pairs of the transmission gear sets and the muffled noises caused by the torsional resonance of the drive train.

### {CITATION LIST}

### {PATENT LITERATURE}

Patent Document 1: Japanese Patent Application Publication No. 2003-194095
Patent Document 2: Japanese Patent Application Publication No. 2001-74102

### {SUMMARY OF INVENTION}

### {SOLUTION TO PROBLEM}

However, the conventional torsional vibration attenuation apparatus is constructed to have the same curvature of the contacted surface at both the times when the second rotation member is twisted with respect to the first rotation member in the positive side and in the negative side.

For this reason, the compression amounts of the resilient member, i.e., the rigidities of the resilient member compressed by the displacement member are identical to each other when the second rotation member is twisted with respect to the first rotation member in the positive side and in the negative side from a neutral position where the second rotation member is not twisted with respect to the first rotation member in either one of the positive side and the negative side.

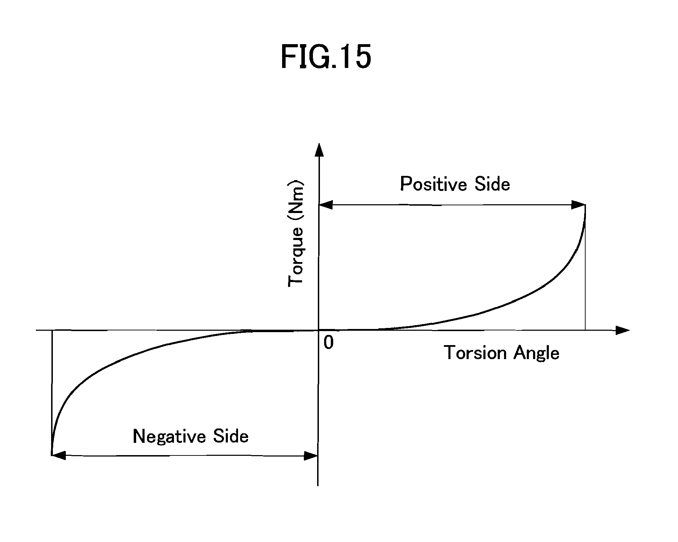

The torsional properties of the first rotation member and the second rotation member in the negative side and the positive side are identical to each other as shown in FIG. 15.

In order to reduce the rigidity of the resilient member for widening the range of the torsion angle of the first rotation member and the second rotation member, the conventional torsional vibration attenuation apparatus is constructed to have a small preset load for maintaining the neutral state of the first rotation member and the second rotation member when the first rotation member and the second rotation member is in the neutral state with no twist of the first rotation member and the second rotation member.

Here, to have the vehicle transferred from the acceleration state to the deceleration state, the engine brake is applied to the internal combustion engine, so that the second rotation member is twisted with respect to the first rotation member to the negative side from the positive side. At this time, the displace member slides on the contacted surface to be displaced from the positive side to the negative side through the neutral position.

When the displace member slides on the contacted surface to be displaced from the positive side to the negative side through the neutral position, the rotational torque to be transmitted to the first rotation member from the internal combustion engine is the same in magnitude as the rotational torque to be transmitted to the second rotation member from the drive train in the vicinity of the minimum torsion angle of zero between the first rotation member and the second rotation member.

The conventional torsional vibration attenuation apparatus is constructed to have the resilient member with the same and small rigidities to be compressed by the displacement member when the second rotation member is twisted with respect to the first rotation member in the positive side and the negative side from the neutral position, so that when the torsion angle of the first rotation member and the second rotation member is in the vicinity of the minimum torsion angle of zero, viz., when the displacement member slides on the contacted surface to the neutral position from the positive side, the displacement member is moved to the negative side from the neutral position to have the second rotation member twisted with respect to the first rotation member in the negative side.

When further the torsion angle of the first rotation member and the second rotation member is at the minimum torsion angle, the rotational torque to be transmitted to the second rotation member from the drive train becomes a reaction force to the rotational torque to be transmitted to the first rotation member from the internal combustion engine, so that the displacement member is moved to the positive side from the negative side through the neutral position, and the second rotation member is twisted with respect to the first rotation member in the positive side.

As will be understood from the foregoing description, the second rotation member is twisted with respect to the first rotation member alternately in the positive side and in the negative side until the rotational torque to be transmitted to the second rotation member from the drive train becomes larger than the rotational torque to be transmitted to the first rotation member from the internal combustion engine immediately after the deceleration time of the vehicle.

Due to the fact that the internal combustion engine is in the state of no load at the deceleration time of the vehicle, the alternate twisting actions of the second rotation member with respect to the first rotation member are inclined to give rise to an unpleasant feeling to a driver, thereby affording to improve the conventional torsional vibration attenuation apparatus.

The present invention has been made to solve the previously mentioned problem, and has an object to provide a torsional vibration attenuation apparatus that can widen the range of the torsion angle between the first rotation member and the second rotation member to lower the rigidity of the resilient member, as well as to prevent the first rotation member and the second rotation member from being twisted alternately in the positive side and in the negative side when the first rotation member and the second rotation member are displaced to their neutral positions.

### {SOLUTION TO PROBLEM}

To achieve the above object of the present invention, the torsional vibration attenuation apparatus comprises, a first rotation member; a second rotation member disposed in coaxial relationship with the first rotation member; one or more resilient members each disposed between the first rotation member and the second rotation member to be resiliently deformed between the first rotation member and the second rotation member when the first rotation member and the second rotation member are relatively rotated with each other; a curved surface portion provided on either one of the first rotation member and the second rotation member and having a predetermined curvature; and a torque transmission member intervening between the first rotation member and the second rotation member and having one end portion held in contact with the curved surface portion and the other end portion held in engagement with one end portion in an extending direction of the resilient member, the torque transmission member being operative to transmit a rotation torque between the first rotation member and the second rotation member through the resilient deformation of the resilient member caused by the one end portion moving along the curved surface portion when the second rotation member is twisted with respect to the first rotation member in positive and negative sides, wherein the curved surface portion has a first curvature section to be held in contact with the one end portion of the torque transmission member when the second rotation member is twisted with respect to the first rotation member in the positive side from a neutral position where the first rotation member and the second rotation member are not twisted with each other, and a second curvature section to be held in contact with the one end portion of the torque transmission member when the second rotation member is twisted with respect to the first rotation member in the negative side from the neutral position, the first curvature section having a first curvature and the second curvature section having a second curvature, the second curvature being larger than the first curvature.

The torsional vibration attenuation apparatus is for example constructed to have the second rotation member provided with a curved surface portion having a predetermined curvature, and to have the torque transmission member disposed between the curved surface portion and the resilient member, so that when the first rotation member and the second rotation member are relatively rotated with each other, the torque transmission member slides on and along the curved surface portion to have the curved surface portion urge the resilient member through the torque transmission member, thereby making it possible to allow the torque transmission member to press the curved surface portion with the reaction force of the resilient member resiliently deformed to transmit the rotational torque between the first rotation member and the second rotation member.

For this reason, the resilient member is pressed by the curved surface portion through the torque transmission member in response to the rotation of the second rotation member having the curved surface portion to vary the reaction force of the resilient member against the torque transmission member, thereby making it possible to widen the range of the torsion angle between the first rotation member and the second rotation member and to lower the rigidity of the resilient member.

For this reason, the torsional rigidity of the first rotation member and the second rotation member can be reduced when the torsion angle of the first rotation member and the second rotation member is at a small level in the case that the torsional vibration attenuation apparatus is provided between the drive source of the vehicle and the transmission of the drive train having the transmission gear set to transmit the rotational torque from the drive source to the first rotation member and to transmit the rotational torque from the second rotation member to the transmission.

Therefore, the torsional vibration attenuation apparatus as set forth in the above invention can attenuate the torsional vibrations originated from the rotational fluctuation caused by the torque fluctuation of the drive source to suppress the clattering noises from being generated in the gear pairs of the transmission with no load in the area where the rotational torque to be transmitted to the second rotation member from the first rotation member is small as at the time when the vehicle is shifted to the neutral position in the idling state.

The torsional vibration attenuation apparatus as set forth in the above invention can widen the range of the torsion angle between the first rotation member and the second rotation member, and thus can attenuate the relatively large torsional vibrations originated from the rotational fluctuation caused by the torque fluctuation of the drive source, and can attenuate the torsional resonance in the drive train during the acceleration time and the deceleration time of the vehicle when a large rotational torque is transmitted to the second rotation member from the first rotation member, thereby making it possible to suppress the chinking noises caused by the collisions of the slipping gear pairs of the transmission gear sets and to suppress the muffled sounds caused by the torsional resonance of the drive train.

The torsional vibration attenuation apparatus as set forth in the above invention is constructed to have the torque transmission member slide on the curved surface portion when the first rotation member is rotated with an excessively large torque inputted therein, so that the first rotation member is freely rotated with respect to the second rotation member, thereby making it possible to allow the curved surface portion to function as a torque limiter. The second rotation member can be protected from being inputted with the excessively large torque from the first rotation member, thereby making it possible to protect the transmission gear sets of the transmission.

The torsional vibration attenuation apparatus as set forth in the above invention is constructed to have the curved surface portion having a first curvature section to be held in contact with the one end portion of the torque transmission member when the second rotation member is twisted with respect to the first rotation member in the positive side from a neutral position where the first rotation member and the second rotation member are not twisted with each other, and to have a second curvature section to be held in contact with the one end portion of the torque transmission member when the second rotation member is twisted with respect to the first rotation member in the negative side from the neutral position, the first curvature section having a first curvature and the second curvature section having a second curvature, the second curvature being larger than the first curvature.

For this reason, the torsional vibration attenuation as set forth in the above invention can make the rigidity of the resilient member when the second rotation member is twisted in the negative side with respect to the first rotation member larger than the rigidity of the resilient member when the second rotation member is twisted in the positive side with respect to the first rotation member in the case that the rigidity of the resilient member is reduced to make small the preset load of the resilient member for maintaining the first rotation member and the second rotation member at their neutral positions.

Therefore, the torsional vibration attenuation apparatus as set forth in the above invention can suppress the one end portion of the torque transmission member from being displaced from the neutral position to the negative side when the vehicle is transferred to the deceleration state from the acceleration state to have the second rotation member twisted with respect to the first rotation member from the positive side to the negative side to be positioned at the neutral position where the torsion angle is at a smallest level.

When the torsion angle of the first rotation member and the second rotation member is at a small level, the rotational torque to be transmitted to the second rotation member from the drive train becomes a reaction force to the rotational torque to be transmitted to the first rotation member from the drive source to have the torque transmission member moved to the positive side from the negative side through the neutral position, thereby leading to twisting the first rotation member and the second rotation member to the positive side.

The torsional vibration attenuation apparatus as set forth in the above invention can reduce the negative side torsion amount of the first rotation member and the second rotation member to a smaller level than in the conventional apparatus, thereby making it possible to reduce the torsion amount of the first rotation member and the second rotation member twisted alternately in the positive side and in the negative side and to suppress the unpleasant feeling from being given to the driver.

The torsional vibration attenuation apparatus may preferably be so constructed that the first rotation member and the second rotation member are mounted on a vehicle in such a manner that the first rotation member is transmitted with a rotation torque from an internal combustion engine, and the second rotation member is operative to output the rotation torque to a drive train, the second rotation member being twisted with respect to the first rotation member in the positive side from the neutral position at the acceleration time of the vehicle, while the second rotation member being twisted with respect to the first rotation member in the negative side from the neutral position at the deceleration time of the vehicle.

The torsional vibration attenuation apparatus as set forth in the above invention is constructed to have the second rotation member twisted with respect to the first rotation member in the positive side at the acceleration time of the vehicle, and to have the second rotation member twisted with respect to the first rotation member in the negative side at the deceleration time of the vehicle, so that the negative side torsion amount of the first rotation member and the second rotation member at the deceleration time of the vehicle can be reduced to a smaller level than in the conventional apparatus, thereby making it possible to reduce the torsion amount of the first rotation member and the second rotation member twisted alternately in the positive side and in the negative side and to suppress the unpleasant feeling from being given to the driver.

The torsional vibration attenuation apparatus may preferably be so constructed that the curved surface portion is constituted by a cam member integrally rotated with one of the first rotation member and the second rotation member and having a curved outer peripheral surface, and the torque transmission member being provided with an arm member having one end portion held in contact with the cam member and the other end portion held in engagement with one end portion in the extending direction of the resilient member and swingable around a swing fulcrum portion provided on either one of the first rotation member and the second rotation member between the one end portion of the torque transmission member and the other end portion of the torque transmission member.

The torsional vibration attenuation apparatus as set forth in the above invention is simple in construction only with the resilient member, the arm member, and the cam member provided between the first rotation member and the second rotation member, thereby making it possible to widen the range of the torsion angle between the first rotation member and the second rotation member and to simplify the construction of the torsional vibration attenuation apparatus as a whole.

The torsional vibration attenuation apparatus may preferably comprise two or more torque transmission members which are disposed in point symmetrical relationship with each other across the center axis of the first rotation member.

The torsional vibration attenuation apparatus as set forth in the above invention is constructed to have two or more arm members disposed in point symmetrical relationship with each other across the center axis of the first rotation member, thereby making it possible to have the arm members sandwich and support the cam member across the center axis of the first rotation member.

For this reason, the cam member is sandwiched and supported by the arm members across the center axis of the first rotation member under the influence of the reaction force of the resilient member and the strong pressing force when the resilient member is urged by the cam member through the arm members. This ensures that the rotational torque is transmitted between the first rotation member and the second rotation member, thereby making it possible to have the first rotation member and the second rotation member reliably rotated integrally with each other.

The torsional vibration attenuation apparatus may preferably b so constructed that the second rotation member has an outer peripheral portion formed with the cam member and an inner peripheral portion provided with a boss member connected with the input shaft of a transmission provided in the drive train of the vehicle, and the first rotation member is provided with a pair of disc plates arranged at the both axial sides of the first rotation member to be secured to each other in axially spaced relationship with each other and formed with an accommodation portion circumferentially extending to accommodate therein the resilient member, and a pair of retaining members supporting the both circumferential end portions of the resilient member to have the resilient member supported on the both circumferential portions of the accommodation member, the other end portion of the arm member being held in engagement with the one circumferential end portion of the resilient member through either one of the retaining members.

The torsional vibration attenuation apparatus as set forth in the above invention is constructed to have the resilient member accommodated in the accommodation portions of a pair of disc plates and to have the pair of retaining members supporting the both circumferential end portions of the resilient member to have the resilient member supported on the both circumferential portions of the accommodation member, the other end portion of the arm member being held in engagement with the one circumferential end portion of the resilient member through either one of the retaining members, thereby making it possible to widen the range of the torsion angle between the first rotation member and the second rotation member and to smoothly transmit the rotational torque from the first rotation member to the second rotation member.

The torsional vibration attenuation apparatus may preferably be so constructed that the other end portion of the arm member is provided with a roller element to be held in engagement with one of the retaining members through the roller element.

When the arm member is swung around the swing fulcrum portion by the rotation of the cam member to have the other end portion of the arm member moved radially inwardly of the first rotation member, the other end portion of the arm member is held in engagement with the one of the retaining members through the roller member, thereby making it possible to have the resilient member resiliently deformed circumferentially of the first rotation member while allowing the other end portion of the arm member to smoothly radially slide on and along the one of the retaining members through the roller member.

The torsional vibration attenuation apparatus may preferably further comprise a hysteresis mechanism intervening between the cam member and the pair of the disc plates to have the cam member and the pair of the disc plates held in friction contact with each other.

The torsional vibration attenuation apparatus as set forth in the above invention is constructed to have the hysteresis mechanism intervene between the cam member and the pair of disc plates, thereby making it possible to increase the hysteresis torque of the cam member and the pair of disc plates in the state of the relatively large torsion angle between the cam member and the pair of disc plates, and thereby making it possible to even further suppress the muffled sounds and the chinking noises caused by the torsional resonance of the drive train from being generated.

### {ADVANTAGEOUS EFECTS OF INVENTION}

The present invention makes it possible to provide a torsional vibration attenuation apparatus that is capable of widening the range of the torsion angle between the first rotation member and the second rotation member so as to prevent the large torsional vibration from being generated, as well as of preventing the first rotation member and the second rotation member from being twisted alternately in the positive side and in the negative side when the first rotation member and the second rotation member are displaced to their neutral positions.

### {BRIEF DESCRIPTION OF DRAWINGS}

FIG. 1 is a view showing one preferred embodiment of a torsional vibration attenuation apparatus according to the present invention, and a front view of the torsional vibration attenuation apparatus.
FIG. 2 is a view showing the one preferred embodiment of the torsional vibration attenuation apparatus according to the present invention, and a cross-sectional view taken along the chain line and seen from the arrows A-A in FIG. 1.
FIG. 3 is a view showing one preferred embodiment of the torsional vibration attenuation apparatus according to the present invention, and a fragmentally cross-sectional view taken along the chain line and seen from the arrows B-B in FIG. 2.
FIG. 4 is a view showing the one preferred embodiment of the torsional vibration attenuation apparatus according to the present invention, and a fragmentally cross-sectional view taken along the chain line and seen from the arrows C-C in FIG. 2.
FIG. 5 is a view showing the one preferred embodiment of the torsional vibration attenuation apparatus according to the present invention, and a plan view of an arm member forming part of the torsional vibration attenuation apparatus.
FIG. 6 is a view showing the one preferred embodiment of the torsional vibration attenuation apparatus according to the present invention, and a cross-sectional view taken along the chain line and seen from the arrows D-D in FIG. 5.
FIG. 7 is a view showing the one preferred embodiment of the torsional vibration attenuation apparatus according to the present invention, and is a front view of the cam member.
FIG. 8 is a view showing the one preferred embodiment of the torsional vibration attenuation apparatus according to the present invention, and is an exploded view showing a hysteresis mechanism.
FIG. 9 is a view showing the one preferred embodiment of the torsional vibration attenuation apparatus according to the present invention, and is a front view of the torsional vibration attenuation apparatus when the torsion angle of the disc plates and the boss is +45 degrees.
FIG. 10 is a view showing the one preferred embodiment of the torsional vibration attenuation apparatus according to the present invention, and is a front view of the torsional vibration attenuation apparatus when the torsion angle of the disc plates and the boss is +90 degrees.
FIG. 11 is a view showing the one preferred embodiment of the torsional vibration attenuation apparatus according to the present invention, and is a front view of the torsional vibration attenuation apparatus when the torsion angle of the disc plates and the boss is -45 degrees.
FIG. 12 is a view showing the one preferred embodiment of the torsional vibration attenuation apparatus according to the present invention, and showing the relationship between the torsion angle and the torque of the torsional vibration attenuation apparatus.
FIG. 13 is a view showing the one preferred embodiment of the torsional vibration attenuation apparatus according to the present invention, and showing an enlarged view of the A portion in FIG. 12.
FIG. 14 is a view showing the one preferred embodiment of the torsional vibration attenuation apparatus according to the present invention, and showing a state in which one end portion of the arm member is moved to the positive side cam surface section and the negative side cam surface section from the neutral position.
FIG. 15 is a view showing the relationship between the torsion angle and the torque of a conventional torsional vibration attenuation apparatus.

### {DESCRIPTION OF EMBODIMENTS}

The preferred embodiments of the torsional vibration attenuation apparatus according to the present invention will be described hereinafter with reference to the accompanying drawings.

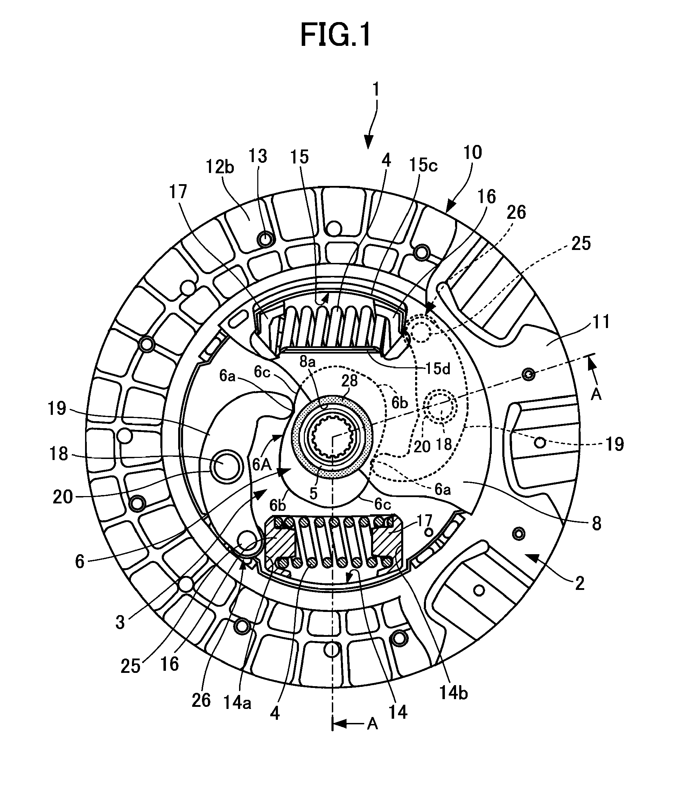

FIGS. 1 to 14 are views showing the one preferred embodiment of the torsional vibration attenuation apparatus according to the present invention.

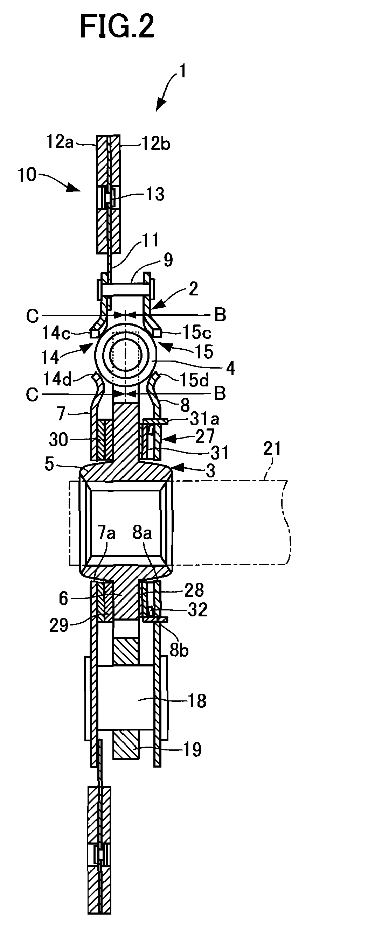

First, the construction of the embodiment of the torsional vibration attenuation apparatus according to the present embodiment will be explained hereinafter.
The torsional vibration attenuation apparatus 1 is shown in FIGS. 1 and 2 to comprise a first rotation member 2 inputted with a rotational torque from an internal combustion engine not shown but constituting a drive source, and a second rotation member 3 disposed in coaxial relationship with the first rotation member 2 to output and transmit the rotational torque of the first rotation member 2 to a transmission forming part of a drive train not shown, a pair of resilient members constituted by a pair of coil springs 4 disposed between the first rotation member 2 and the second rotation member 3 to be capable of being compressed, viz., resiliently deformed in the circumferential direction of the first rotation member 2 when the first rotation member 2 and the second rotation member 3 are relatively rotated with each other.

The second rotation member 3 is constituted by a boss 5, i.e., a boss member held in splined engagement with the outer peripheral portion of the input shaft 21 of the transmission of the drive train, and a cam member 6 provided on the outer peripheral portion of the boss 5

Here, the boss 5 and the cam member 6 may be integrally formed. Further, the boss 5 and the cam member 6 may be separately formed with the peripheral portion of the boss 5 having a splined portion and with the peripheral portion of the cam member 6 having a splined portion, the splined portion of the peripheral portion of the boss 5 being held in splined connection with the splined portion of the peripheral portion of the cam member 6.

The first rotation member 2 is provided with a pair of disc plates 7, 8 and a clutch disc 10. The disc plates 7, 8 are respectively disposed at the both axial sides of the boss 5 and spaced apart at a predetermined axial interval and connected with each other by pins 9 and pins 18 serving as a swinging fulcrum portion.

The disc plates 7, 8 have respective cylindrical central bores 7a, 8a formed therein to receive the boss 5 therein with the boss 5 being in coaxial relationship with the disc plates 7, 8.

The pins 9, 18 are bridged between and are supported on the disc plates 7, 8, to ensure that the disc plates 7, 8 are reliably fastened with each other by the pins 9, 18 which respectively have axially outer ends each having a large diameter to prevent the pins 9, 18 from being released from the disc plates 7, 8. This means that the disc plates 7, 8 are integrally connected with each other, and thus can be rotated together with each other.

The clutch disc 10 is provided at the radially outer end portion of the disc plate 7, and has a cushioning plate 11 and friction materials 12a, 12b. The cushioning plate 11 is constituted by a ring-shaped member waved in its thickness direction, and is secured to the disc plates 7, 8 by the pins 9.

The friction materials 12a, 12b are secured to the both surfaces of the cushioning plate 11 by rivets 13. The friction materials 12a, 12b are positioned between a flywheel not shown but secured to a crankshaft forming part of an internal combustion engine and a pressure plate of a clutch cover secured to the flywheel by bolts.

The friction material 12a, 12b are pressurized by the pressure plate to be brought into frictional engagement with the flywheel and the pressure plate, so that the rotational torque of the internal combustion engine can be inputted to the disc plates 7, 8.

In response to the depression of a clutch pedal not shown, the friction materials 12a, 12b are released from being pressurized by the pressure plate, thereby allowing the friction materials 12a, 12b to be spaced from the flywheel, so that the rotational torque of the internal combustion engine cannot be inputted to the disc plates 7, 8..

The disc plates 7, 8 are respectively formed with a pair of accommodation window holes 14, 15, respectively constituting accommodation portions, along the outer peripheral portions of the coil springs 4 to be spaced apart from each other in the circumferential direction of the disc plates 7, 8 and in opposing relationship with each other so that the coil springs 4 can be accommodated in the window holes 14, 15.

The accommodation window holes 14, 15 are formed by punching along the outer peripheral portions of the coil springs 4 with a press machine, and thus have respective both circumferential ends closed.

As shown in FIGS. 2 to 4, the disc plates 7, 8 have respective outer support edge portions (accommodation portions) 14c, 15c circumferentially extending along the radially outer edge of the accommodation window hole 14 and respective inner support edge portions (accommodation portions) 14d 15d circumferentially extending along the radially inner edge of the accommodation window hole 14. The outer support edge portions 14c, 15c and the inner support edge portions 14d, 15d expand axially outwardly.

Each of the coil springs 4 is retained at its circumferential both end portions by a pair of spring seats 16, 17 constituting a pair of retaining members as defined in the present invention. The spring seats 16, 17 respectively have inner peripheral surfaces each formed with an end coil.

The end coils are tantamount to one or two turns of the circumferential both end portions of the coil spring 4, and allow the circumferential both end portions of the coil spring 4 to seat thereon, so that the beginning end and the terminal end in the winding direction of the coil spring 4 can be engaged with the coil ends, thereby making it possible to prevent the coil spring 4 from being rotated and to have the coil spring 4 seated on the spring seats 16, 17.

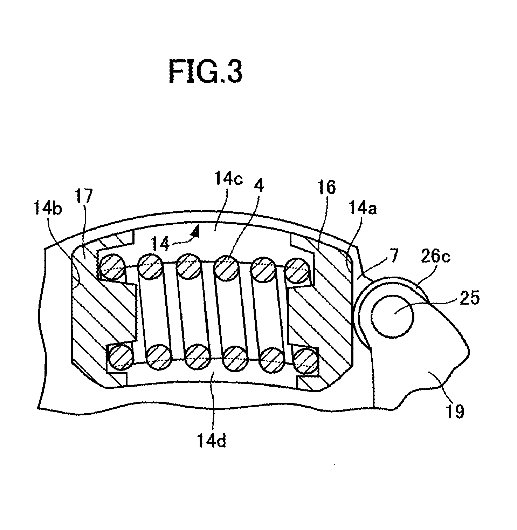

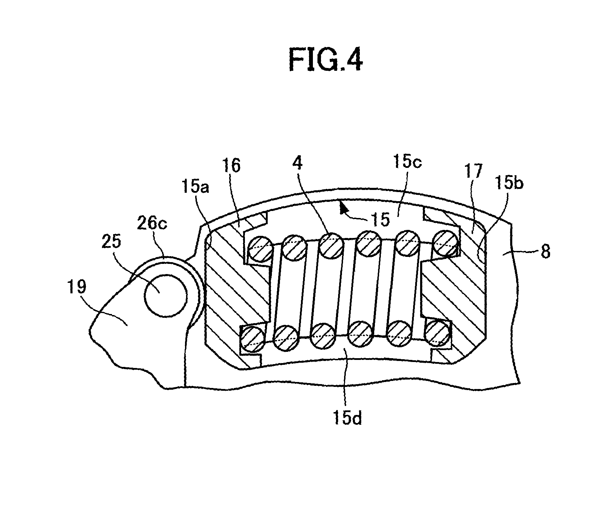

As shown in FIGS. 3, 4, the closed ends of the accommodation window holes 14, 15 spaced apart in the circumferential direction of the disc plates 7, 8 constitute engagement portions 14a, 14b, 15a, 15b held in engagement with the circumferential end portions of the spring seats 16, 17, so that the circumferential end portions of the spring seats 16, 17 can be held in engagement with the engagement portions 14a, 14b, 15a, 15b even when the spring seats 16, 17 are circumferentially moved farthest away from each other.

The outer peripheral portions of the spring seats 16, 17 are in opposing relationship with the outer support edge portions 14c, 15c and the inner support edge portions 14d, 15d, and prevented from being dislocated from the accommodation window holes 14, 15 by the outer support edge portions 14c, 15c and the inner support edge portions 14d, 15d.

Between the spring seats 16 and the cam member 6 are provided a pair of arm members 19 which are disposed between the disc plates 7, 8 and swingably supported on the pinsl8, respectively. Each of the arm members 19 constitute a torque transmission member as defined in the present invention.

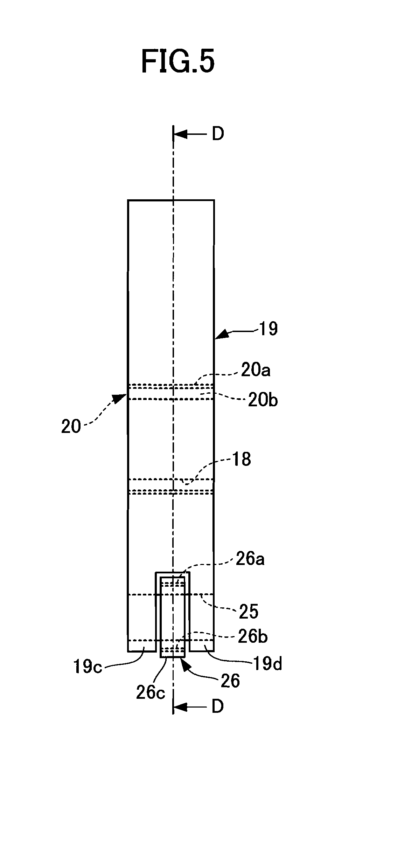

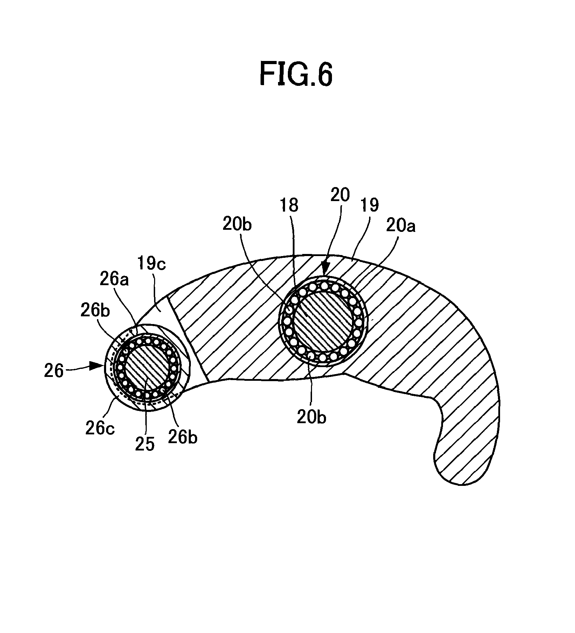

As shown in FIGS. 5, 6, a needle bearing 20 intervenes between the pin 18 and the arm member 19. The needle bearing 20 is constituted by an outer race 20a securely mounted on the arm member 19, and needles 20b intervening between the outer race 20a and the pin 18. For this reason, the arm member 19 is rotatable with respect to the pin 18 and supported on the pin 18 through the needle bearing 20.

Further, the arm member 19 has one end portion formed with bifurcated projection portions 19c, 19d which are connected with each other by a pin 25. In other words, the pin 25 is supported on the projection portions 19c, 19d.

The pin 25 has a roller member 26 rotatably supported thereon. The roller member 26 constitutes a roller element as defined in the present invention. The roller member 26 is constituted by an outer race 26a provided on the outer peripheral portion of the pin 25, a needle bearing constituted by needles 26b intervening between the outer race 26a and the pin 25, and a roller 26c securely mounted on the outer peripheral portion of the outer race 26a, so that the roller 26c is rotatable with respect the pin 25 through the needle bearing.

The roller member 26c is held in engagement with the circumferential outer surface of the spring seat 16, so that the other end portion of the arm member 19 can be held in engagement with the circumferential outer surface of the spring seat 16.

In addition, the cam member 6 has a cam surface 6A formed to have curvatures different from each other depending on the twisting directions of the disc plates 7, 8 with respect to the boss 5.

The following description will be directed to the curvatures of the cam surface 6A of the cam member 6.
In the state that the rotational torque is not transmitted to the drive train from the internal combustion engine, viz., the disc plates 7, 8 are not twisted with respect to the boss 5, one end portion of the arm member 19 is designed to be held in engagement with a neutral position 6a on the cam surface 6A of the cam member 6.

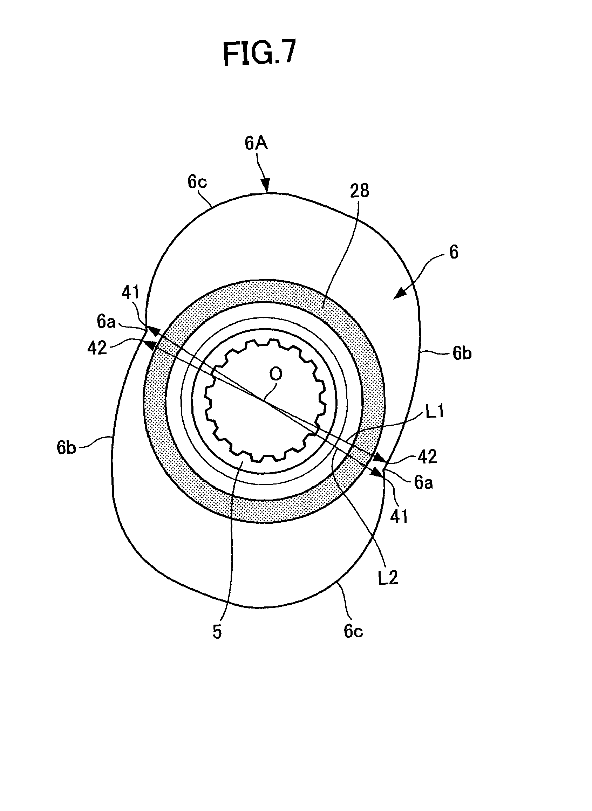

As shown in FIG. 7, the curved surface portion has a first curvature section (hereinafter simply referred to as a positive side cam surface section 6b) to be held in contact with the one end portion of the arm member 19 when the boss 5 is twisted with respect to the disc plates 7, 8 in the positive side from a neutral position, and a second curvature section (hereinafter simply referred to as a negative side cam surface section 6c) to be held in contact with the one end portion of the arm member 19 when the boss 5 is twisted with respect to the disc plates 7, 8 in the negative side from the neutral position. The negative side cam surface section 6c is formed to have a radius of curvature smaller than the radius of curvature of the positive side cam surface section 6b. In other words, the positive side cam surface section 6b has a curvature larger than the curvature of the negative side cam surface section 6c.

For this reason, as shown in FIG. 7, the diameter L1 connecting both the rising portions of the curvatures of the negative side cam surface section 6c across the rotation center O of the cam member 6 is larger than the diameter L2 connecting both the rising portions of the curvatures of the positive side cam surface section 6b across the rotation center O of the cam member 6. This means that each of the curvatures of the rising portions of the negative side cam surface section 6c from the neutral position 6a of the cam surface 6A of the cam member 6 is larger than each of the curvatures of the rising portions of the positive side cam surface section 6b from the neutral position 6a of the cam surface 6A of the cam member 6.
Here, the cam member 6 constitutes a curved surface portion as defined in the present invention.

The present embodiment thus constructed can make variable the position of the cam surface 6A held in contact with the one end portion of the arm member 19 in response to the rotation of the cam member 6, thereby making it possible to make variable the compression amount of the coil spring 4 to be urged by the arm member 19 through the spring seat 16. In response to the rotation of the cam member 6, the spring seat 16 is moved toward and away from the spring seat 17 along the peripheral edges of the accommodation window holes 14, 15.

The compression amount of the coil spring 4 compressed when the boss 5 is twisted with respect to the disc plates 7, 8 in the negative side is larger than the compression amount of the coil spring 4 compressed when the boss 5 is twisted with respect to the disc plates 7, 8 in the positive side. This means that the rigidity of the coil spring 4 when the boss 5 is twisted with respect to the disc plates 7, 8 in the negative side is larger than the rigidity of the coil spring 4 when the boss 5 is twisted with respect to the disc plates 7, 8 in the positive side.

Further, the arm members 19 are disposed in point symmetrical relationship with each other with respect to the center axis of the disc place 7, 8, and are held in contact with the curved surface portion 6A across the center axis of the disc place 7, 8.

On the other hand, the torsional vibration attenuation apparatus 1 according to the present embodiment is shown in FIG. 2 to comprise a hysteresis mechanism 27 which intervenes between the disc plates 7, 8 and the cam member 6. The hysteresis mechanism 27 is constituted by annular friction materials 28, 29, 30, 31 and plate springs 32.

Each of the friction materials 28, 29 is constituted by a material having a surface with a predetermined coefficient of friction. The friction materials 28, 29 are adhered and fastened to the axial outer surfaces of the cam member 6 by an adhesive. Further, the friction materials 28, 29 may be fastened to the cam member 6 by providing pins integrally formed with the friction materials 28, 29, and fittingly engaged with pin holes formed on the axial outer peripheral portions of the cam member 6.

The friction material 30 is constituted by a material having a surface with a predetermined coefficient of friction. The friction material 30 is adhered and fastened to the inner peripheral surface of the disc plate 7 by an adhesive. Further, the friction material 30 may be firmly fastened to the disc plate 7 by providing pins integrally formed with the friction material 30, and fittingly engaged with pin holes formed on the inner peripheral portion of the disc plate 7.

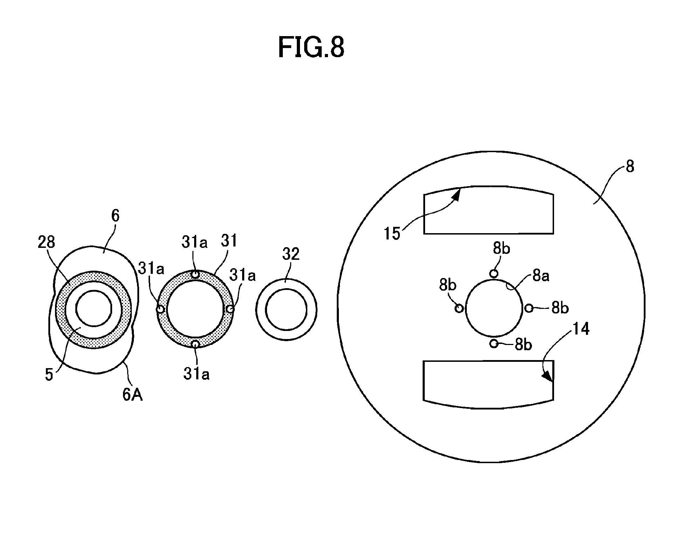

The friction material 31 is shown in FIG. 8 to be constituted by a material having a surface with a predetermined coefficient of friction. The friction material 31 is adhered and fastened to the inner peripheral surface of the disc plate 7 by an adhesive. Further, the friction material 30 may be firmly fastened to the disc plate 7 by providing pins integrally formed with the friction material 30, and fittingly engaged with pin holes formed on the inner peripheral portion of the disc plate 7.

A plate spring 32, formed in conical shape, is intervened between the friction member 31 and disc plate 8.

The plate spring 32 is capable of generating a resilient force in the axial direction of the cam member 6 to have the friction material 31 and the friction material 28 held in frictional contact with each other, and to have the friction material 29 and the friction material 30 also held in frictional contact with each other, so that the cam member 6 and the disc plates 7, 8 are held in frictional contact with each other, thereby generating a hysteresis torque between the cam member 6 and the disc plates 7, 8.

Further, the hysteresis mechanism may be constructed to have the friction materials 30, 31 held in direct frictional contact with the axial outer peripheral surfaces of the cam member 6 without using the friction materials 28, 29.

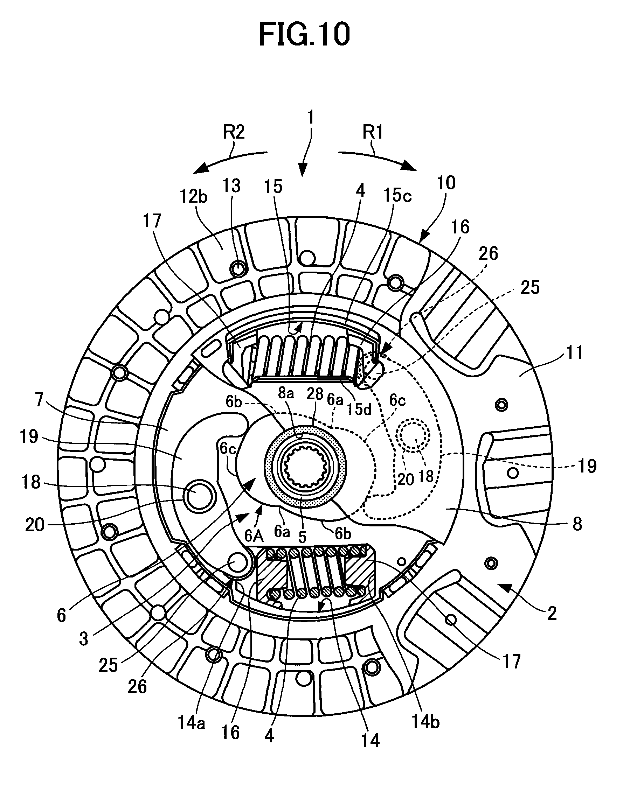

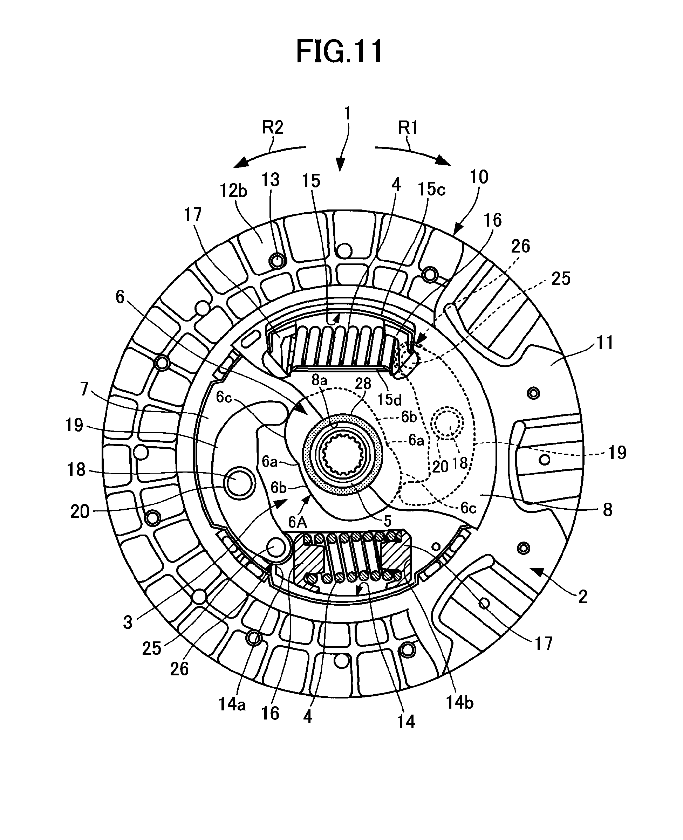

Next, the operation of the torsional vibration attenuation apparatus according to the present embodiment will be described hereinafter. FIGS. 10 and 11 show the states in which the disc plates 7, 8 receive the rotational torques from the internal combustion engine to be rotated in the anti-clockwise direction (R2 direction) from the state shown in FIG. 1. For the sake of convenience of explanation, the boss 5 will be explained as being twisted in a positive clockwise direction (R1 direction) with respect to the disc plates 7, 8.

Here, the state of the boss 5 twisted in the positive clockwise direction indicates a time when the vehicle is being accelerated.

The friction materials 12a, 12b are pressed by the pressure plate to be brought into frictional engagement with the flywheel and the pressure plate, so that the rotational torque of the internal combustion engine is inputted to the disc plates 7, 8.

The torsional vibration attenuation apparatus 1 according to the present embodiment is, as shown in FIG. 1, operated to have the cam member 6 positioned at its initial position and rotated together with the boss 5 in the state that the disc plates 7, 8 and the boss 5 are rotated under a small relative rotation, viz., at a small torsion angle of the disc plates 7, 8 and the boss 5 in the vicinity of zero degree.

At this time, the one end of the arm member 19 is held in contact with the initial portion of the cam surface 6A of the cam member 6, so that the arm member 19 is pressed against the coil spring seat 16 by the cam member 6, thereby allowing the cam member 6 to urge the coil spring 4.

Further at this time, the arm member 19 is pivoted by the reaction force of the compressed coil spring 4 around the pin 18 serving as a fulcrum under the principle of the lever to press the cam member 6. This means that the rotational torque of the disc plates 7, 8 is transmitted to the cam member 6 through the coil spring 4 and the arm member 19. For this reason, the rotational torque of the internal combustion engine is transmitted to the input shaft of the transmission. At this time, the compression amount of the coil spring 4 becomes small.

Therefore, the torsional vibrations of the disc plates 7, 8 and the boss 5 can be absorbed and attenuated while the power of the internal combustion engine is being transmitted from the disc plates 7, 8 to the boss 5.

When, on the other hand, there is caused a small rotational fluctuation by the torque fluctuation of the internal combustion engine at the acceleration time of the vehicle, the fluctuation torque between the disc plates 7, 8 and the boss 5 is small, whereupon the boss 5 is relatively rotated with respect to the disc plates 7, 8 in the clockwise direction (R1 direction).

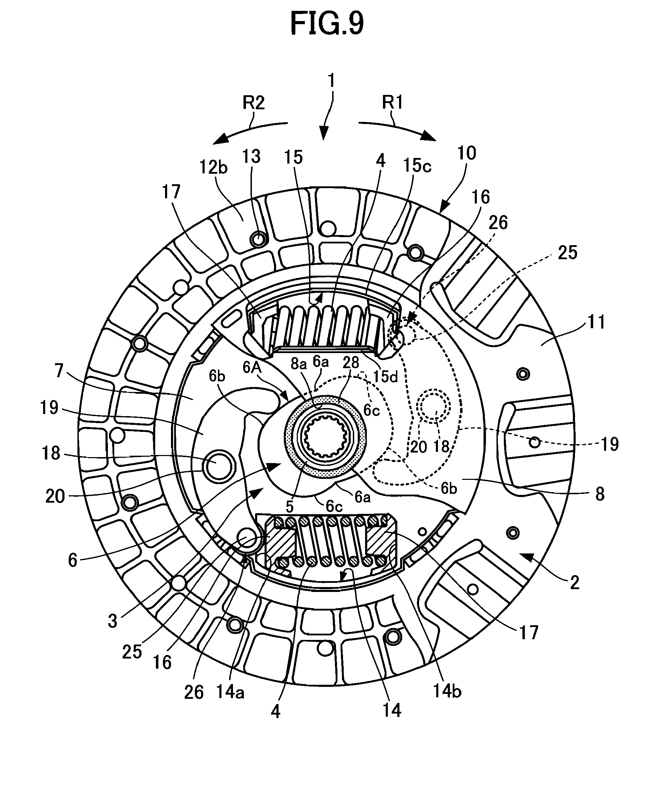

When the cam member 6 is rotated in the R1 direction in response to the increased torsion angle of the disc plates 7, 8 and the boss 5 as in the state shown in FIG. 9 from the state shown in FIG. 1, the one end portion of the arm member 19 is moved along the positive side cam surface section 6b.

The fact that the curvature of the positive side cam surface section 6b is gradually increased from the neutral position 6a in response to the increased torsion angle of the disc plates 7, 8 and the boss 5 leads to the fact that the one end portion of the arm member 19 is pressed by the positive side cam surface section 6b having the curvature gradually increased to have the other end portion of the arm member 19 moved radially inwardly and circumferentially of the disc plate 7, 8.

In response to the rotation of the cam member 6 in the R1 direction, the other end portion of the arm member 19 is moved radially inwardly of the disc plates 7, 8, thereby allowing the spring seat 16 to be moved toward the spring seat 17.

Further, the other end portion of the arm member 19 moved along the circumferential outer peripheral surface of the spring seat 16 through the roller 26c makes it possible for the spring seat 16 not to be prevented from being circumferentially moved.
Further, FIG. 9 is a view showing a torsion angle of +45 degrees of the disc plates 7, 8 and the boss 5.

This means that, as shown in FIGS. 3, 4, the circumferential one end portion of the spring seat 17 is held in engagement with each of the engagement portions 14b, 15b, so that the spring seat 16 is moved toward the spring seat 17 along the peripheral edges of the accommodation window holes 14, 15 to compress the coil spring 4.

As previously mentioned, the arm member 19 is moved to urge the coil spring 4, thereby causing the arm member 19 to be pivoted by the reaction force of the compressed coil spring 4 around the pin 18 serving as the fulcrum under the principle of the lever to press the cam member 6 at a strong pressing force.

It will therefore be understood that the torsional vibration attenuation apparatus according to the present embodiment can absorb and attenuate the torsional vibrations of the disc plates 7, 8 and the boss 5 while the power of the internal combustion engine is being transmitted from the disc plates 7, 8 to the boss 5.

When there is caused a further large rotational fluctuation by the torque fluctuation of the internal combustion engine, the fluctuation torque between the disc plates 7, 8 and the boss 5 is increased, whereupon the boss 5 is further relatively rotated with respect to the disc plates 7, 8 in the clockwise direction (R1 direction).

When the torsion angle of the disc plates 7, 8 and the boss 5 is further increased for example to a maximum torsion angle level of +90 degrees as in the state shown in FIG. 10 from the state shown in FIG. 9, the compression amount of the coil spring 4 reaches a maximum level where the coil spring 4 is urged at an even larger urging force by the cam member 6 through the arm member 19.

For this reason, the reaction force of the coil spring 4 comes to be even further larger than before, thereby making it possible to absorb and attenuate the torsional vibrations of the disc plates 7, 8 and the boss 5 while the power of the internal combustion engine is being transmitted from the disc plates 7, 8 to the boss 5.

In this case, the curvature of the positive side cam surface section 6b becomes even larger from the curvature of the positive side cam surface section 6b at the initial position of the cam member 6 in response to the increased torsion angle of the disc plates 7, 8 and the boss 5, so that when the one end portion of the arm member 19 is pressed to the positive side cam surface section 6b with the curvature gradually increased, the other end portion of the arm member 19 is radially inwardly moved of the disc plates 7, 8.

Also in this case, the other end portion of the arm member 19 moved along the circumferential outer peripheral surface of the spring seat 16 through the roller 26c makes it possible for the spring seat 16 not to be prevented from being circumferentially moved.

When the disc plates 7, 8 are inputted with the excessively large torque from the internal combustion engine, the one end portion of the arm member 19 slides on the positive side cam surface section 6b, thereby making it possible to have the disc plates 7, 8 freely rotated with respect to the cam member 6. This means that the cam member 6 can function as a torque limiter at the acceleration time of the vehicle.

As a consequence, the excessively large torque from the disc plates 7, 8 is prevented from being transmitted to the boss 5, thereby making it possible to protect the transmission gear sets of the transmission.

Due to the fact that the hysteresis mechanism 27 intervenes between the disc plates 7, 8 and the cam member 6, a predetermined amount of hysteresis torque can be generated when the disc plates 7, 8 and the cam member 6 are relatively rotated with each other.

When, on the other hand, the driving torque of the internal combustion engine is diminished at the deceleration time of the vehicle, there is caused an engine brake, so that the rotational torque is transmitted from the input shaft 21 of the transmission to the boss 5. In the case that the rotational fluctuation caused by the torque fluctuation of the internal combustion engine at the deceleration time of the vehicle is at a small level, the fluctuation torque between the boss 5 and the disc plates 7, 8 is at a small level, so that the boss 5 is relatively twisted to a negative side (R2 direction) with respect to the disc plates 7, 8.

When the disc plates 7, 8 and the boss 5 are relatively rotated with each other as indicated from the state shown in FIG. 1 to the state shown in FIG. 11, the cam member 6 is rotated in response to the increased torsion angle of the disc plates 7, 8 and the boss 5, so that the one end of the arm member 19 is moved on the negative side cam surface section 6c.

The curvature of the negative side cam surface section 6c is larger than the curvature of the positive side cam surface section 6b, so that the other end portion of the arm member 19 can be moved radially inwardly and circumferentially of the disc plates 7, 8 when the one end of the arm member 19 is pressed against the negative side cam surface section 6c of the cam member 6.

In response to the rotation of the cam member 6 in the anti-clockwise direction (R2 direction), the other end portion of the arm member 19 is moved radially inwardly of the disc plates 7, 8 to have the spring seat 16 moved toward the spring seat 17.

Also in this case, the other end portion of the arm member 19 moved along the circumferential outer peripheral surface of the spring seat 16 through the roller 26c makes it possible for the spring seat 16 not to be prevented from being circumferentially moved.
Further, FIG. 11 is a view showing a torsion angle of +45 degrees of the disc plates 7, 8 and the boss 5.

This means that, as shown in FIGS. 3, 4, the circumferential one end portion of the spring seat 17 is held in engagement with each of the engagement portions 14b, 15b, so that the spring seat 16 is moved toward the spring seat 17 along the peripheral edges of the accommodation window holes 14, 15 to compress the coil spring 4.

As previously mentioned, the arm member 19 is moved to urge the coil spring 4, thereby causing the arm member 19 to be pivoted by the reaction force of the compressed coil spring 4 around the pin 18 serving as the fulcrum under the principle of the lever to press the cam member 6 at a strong pressing force.

It will therefore be understood that the torsional vibration attenuation apparatus according to the present embodiment can absorb and attenuate the torsional vibrations of the disc plates 7, 8 and the boss 5 while the power of the internal combustion engine is being transmitted from the disc plates 7, 8 to the boss 5.

When the boss 5 is further relatively twisted in the negative side (R2 direction) with respect to the disc plates 7, 8, and the torsion angle of the disc plates 7, 8 and the boss 5 is further increased for example to a maximum torsion angle level of +90 degrees, the compression amount of the coil spring 4 reaches a maximum level. For this reason, the coil spring 4 is urged at an even larger urging force by the cam member 6 through the arm member 19, thereby making it possible to absorb and attenuate the torsional vibrations of the disc plates 7, 8 and the boss 5 while the power of the drive train is being transmitted from the boss 5 to the disc plates 7, 8.

When the boss 5 is inputted with the excessively large torque from the internal combustion engine through the disc plates 7, 8, the one end portion of the arm member 19 slides on the cam surface 6A, thereby making it possible to have the cam member 6 freely rotated with respect to the disc plates 7, 8. This means that the cam member 6 can also function as a torque limiter at the deceleration time of the vehicle.

As a consequence, the excessively large torque from the disc plates 7, 8 is prevented from being transmitted to the boss 5, thereby making it possible to protect the transmission gear sets of the transmission at the deceleration time of the vehicle.

When the disc plates 7, 8 and the cam member 6 are relatively rotated with each other even at the deceleration time of the vehicle, a predetermined amount of hysteresis torque can be generated.

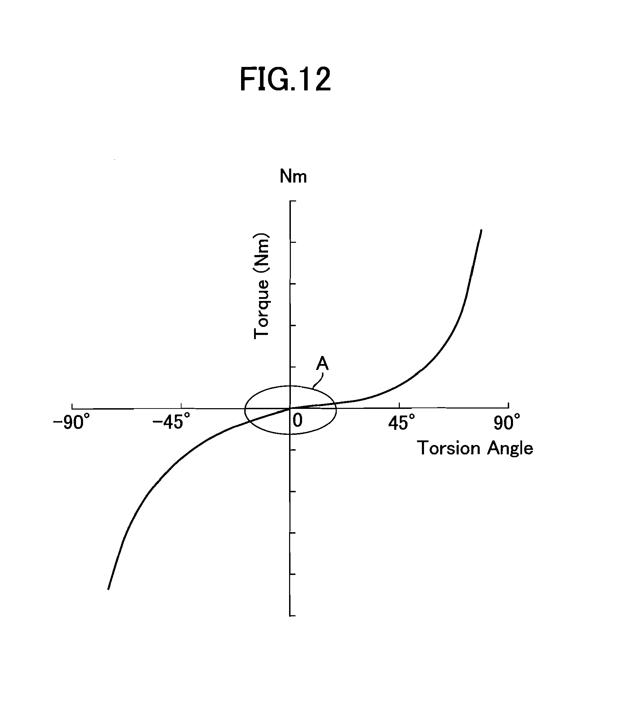

FIG. 12 is a view showing a torsional property of the disc plates 7, 8 and the boss 5, and a graph for explaining the relationship between the torsion angle and the torque of the disc plates 7, 8 and the boss 5 in the present embodiment.

The horizontal axis shows a relative torsion angle of the boss 5 with respect to the disc plates 7, 8, while the vertical axis shows a torque outputted from the boss 5.

As shown in FIG. 12, the coil spring 4 is compressed in response to the increased torsion angle of the boss 5 with respect to the disc plates 7, 8, thereby causing the pressing force of the arm member 19 against the cam member 6 to be increased.

The increased pressing force of the arm member 19 against the cam member 6 makes the torque increased. The variation of the torque becomes a curved torsional property continuously varied.

As previously mentioned, the torsional vibration attenuation apparatus 1 according to the present embodiment is constructed to include a boss 5, a cam member 6 provided at the outer peripheral portion of the boss 5 and rotated together with the boss 5 and having a cam surface 6A, and an arm member 19 provided between the cam member 6 and the coil spring 4 and having one end portion held in contact with the cam surface 6A and the other end portion held in contact with the spring seat 16 of the coil spring 4 to be swingable around the pin 18 bridged between the disc plates 7, 8.

The torsional vibration attenuation apparatus 1 thus constructed can widen the range of the torsion angle of the disc plates 7, 8 and the boss 5, thereby making it possible to lower the rigidity of the coil spring 4. For this reason, the torsional rigidity of the torsional vibration attenuation apparatus 1 can be reduced as a whole and can smoothly transmit the rotational torque to the boss 5 from the disc plates 7, 8.

The torsional vibration attenuation apparatus 1 according to the present embodiment is, as shown in FIG. 12, constructed to have the one end portion of the arm member 19 held in contact with the cam surface 6A of the cam member 6, thereby making it possible to widen the torsion angle of the disc plates 7, 8 and the boss 5 in the positive side and the negative side totaling 180 degrees in response to the rotation of the cam member 6.

The torsional vibration attenuation apparatus 1 according to the present embodiment can make the torsional rigidity of the disc plates 7, 8 and the boss 5 low in torsional property when the torsion angle of the disc plates 7, 8 and the boss 5 is at a small level as shown in FIG. 12.

For this reason, the torsional vibration attenuation apparatus 1 according to the present embodiment can attenuate the torsional vibrations originated from the rotational fluctuation caused by the torque fluctuation of the drive source in the area where the rotational torque to be transmitted to the boss 5 from the disc plates 7, 8 is small as at the time when the vehicle is shifted to the neutral position in the idling state, thereby making it possible to suppress the clattering noises caused by the collisions of the gear pairs of the transmission with no load.

Further, the fact that the torsional vibration attenuation apparatus 1 thus constructed can widen the range of the torsion angle of the disc plates 7, 8 and the boss 5, thereby making it possible to lower the torsional rigidity of the coil spring 4 as a whole results in the fact that the torsional vibration attenuation apparatus 1 can attenuate the torsional vibrations originated from the rotational fluctuation caused by the torque fluctuation of the drive source, thereby making it possible to suppress the chinking noises caused by the collisions of the slipping gear pairs of the transmission gear sets at the low speed acceleration time and the deceleration time when the rotational torque to be transmitted from the disc plates 7, 8 to the boss 5 is at a large level.

Further, the coil spring 4 reduced to a low rigidity level makes it possible to attenuate the torsional vibrations caused by the torsional resonance of the drive source and to suppress the muffled sounds from being generated in the passenger room at the time of the large torsion angle of the disc plates 7, 8 and the boss 5.

In addition, the torsional vibration attenuation apparatus according to the present embodiment is constructed to have a hysteresis mechanism 27 intervening between the disc plates 7, 8 and the cam member 6, thereby making it possible to generate a predetermined hysteresis torque when the disc plates 7, 8 and the cam member 6 are relatively rotated with each other.

For this reason, the hysteresis torque can be generated with respect to the large torsional vibrations originated from the rotational fluctuation caused by the torque fluctuation of the drive source during the acceleration and deceleration times when the rotational torque to be transmitted from the disc plates 7, 8 to the boss 5 is at a large level

Therefore, the torsional vibrations caused by the torsional resonance of the drive train can even further be attenuated, thereby making it possible not only to even further suppress the muffled sounds from being generated in the passenger room but also to even further suppress the chinking sounds from being generated.

When the disc plates 7, 8 are inputted with the excessively large torque from the internal combustion engine, the one end portion of the arm member 19 slides on the cam surface 6A, thereby making it possible to have the disc plates 7, 8 freely rotated with respect to the cam member 6. This means that the cam member 6 can also function as a torque limiter.

As a consequence, the excessively large torque from the disc plates 7, 8 is prevented from being transmitted to the boss 5, thereby making it possible to protect the transmission gear sets of the transmission.

The torsional vibration attenuation apparatus according to the present embodiment is constructed to have a roller 26c rotatably mounted on the other end portion of the arm member 19 through which the other end portion of the arm member 19 is held in engagement with the spring seat 16, so that the spring 4 can resiliently be deformed in the circumferential direction of the disc plates 7, 8 while the other end portion of the arm member 19 is allowed to smoothly slide on the circumferentially outer surface of the spring seat 16 through the roller 26c.

The torsional vibration attenuation apparatus according to the present embodiment is simple in construction only with the coil springs 4, the arm members 19 and the cam member 6 which are provided between the disc plates 7, 8 and the boss 5, thereby making it possible to widen the torsion angle of the disc plates 7, 8 and the boss 5. This means that the construction of the torsional vibration attenuation apparatus can be simplified.

Further, the torsional vibration attenuation apparatus according to the present embodiment is constructed to have the arm members 19 arranged in point symmetrical relationship with each other with respect to the center axis of the disc plates 7, 8, so that the arm members 19 can sandwich the cam member 6 and support the cam member 6 across the center axis of the disc plates 7, 8.

For this reason, the reaction force of the spring 4 generated when the spring 4 is urged by the cam member 6 through the arm members 19 makes it possible to allow the arm members 19 to sandwich and support the cam member 6 under the influence of the strong pressing force across the center axis of the disc plates 7, 8. This ensures that the rotational torque from the disc plates 7, 8 is transmitted to the boss 5.

When, on the other hand, the accelerator pedal is released from being depressed to have the vehicle transferred from the acceleration state to the deceleration state, the boss 5 is transferred with respect to the disc plates 7, 8 from the positive twisted state to the negative twisted state. When the boss 5 is being transferred from the positive twisted state to the negative twisted state, the one end portion of the arm member 19 passes the neutral position 6a (in the vicinity of the zero torque in FIG. 12) of the cam surface 6A of the cam member 6. This neutral position 6a taken by the one end portion of the arm member 19 causes the torsion angle of the disc plates 7, 8 and the cam member 6 to be at a minimum level.

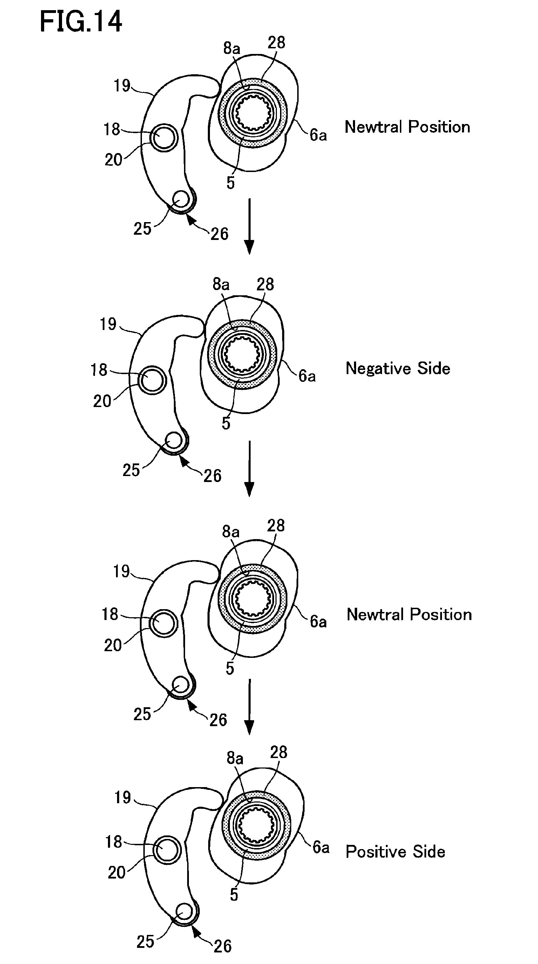

As in the conventional apparatus having the torsional rigidities of the coil spring 4 in the positive side and the negative sides are equal to each other, the torsional angle of the disc plates 7, 8 and the cam member 6 has a minimum value. Under these states, the coil spring 4 has a small preset load, so that the boss 5 is twisted with respect to the disc plates 7, 8 alternately in the positive side or in the negative side when the rotational torque transmitted to the disc plates 7, 8 from the internal combustion engine is equal in magnitude to the rotational torque transmitted to the cam member 6 from the drive train. This alternate twist of the boss 5 leads to giving an unpleasant feeling to a driver (see FIG. 14).

In contrast, the torsional vibration attenuation apparatus according to the present embodiment is so constructed to have the curvature of the negative side cam surface section 6c larger than the curvature of the positive side cam surface section 6b and the curvature of the curvature rising portion 42 of the positive side cam surface 6b rising from the neutral position 6a. The torsional vibration attenuation apparatus thus constructed makes it possible to have the rigidity of the coil spring 4 at the time of the boss 5 twisted in negative side with respect to the disc plates 7, 8 larger than the rigidity of the coil spring 4 at the time of the boss 5 twisted in positive side with respect to the disc plates 7, 8 even with the preset load of the coil spring 4 diminished for maintaining the disc plates 7, 8 and the boss 5 at their neutral positions.

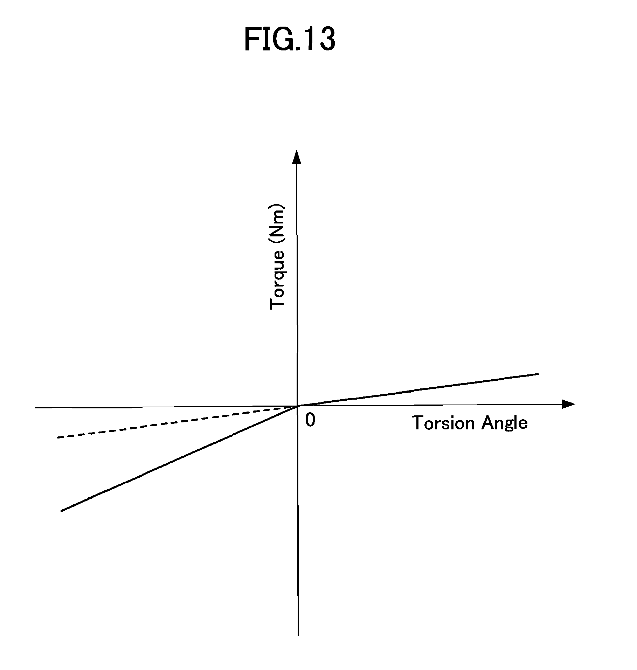

For this reason, the negative side torsion angle can be smaller than the positive side torsion angle with respect to the same amount of torque in the deceleration side (minus torque side) having the engine brake applied from the drive train as shown in FIG. 13 showing the enlarged portion A of FIG. 12. The chain lines in FIG. 13 shows a conventional torsional property with the torsional rigidities of the coil spring 4 in the positive side and in the negative side

The torsional vibration attenuation apparatus according to the present embodiment is constructed to have the rigidity of the negative side coil spring larger than the rigidity of the positive side coil spring, so that the torsion angle of the disc plates 7, 8 and the boss 5 can be made small in the torque the same as in the conventional apparatus as shown in FIG. 13.

For this reason, the one end portion of the arm member 19 can be suppressed from being displaced to the negative side from the neutral position 6a of the cam surface 6A when the vehicle is transferred from the acceleration state to the deceleration state to have the boss 5 twisted with respect to the disc plates 7, 8 to the negative side from the positive side to take its neutral position where the torsion angle is at a smallest level.

When the torsion angle of the disc plates 7, 8 and the boss 5 is small, the rotational torque to be transmitted to the cam member 6 from the drive train serves as a reaction force to the rotational torque to be transmitted to the disc plates 7, 8 from the internal combustion engine. For this reason, the arm member 19 is moved to the positive side from the negative side through the neutral position to have the boss 5 twisted to the positive side with respect to the disc plates 7, 8.

In contrast, the torsional vibration attenuation apparatus according to the present embodiment can make the torsion amount of the boss 5 twisted in the negative side with respect to the disc plates 7, 8 smaller than the torsion amount generated in the conventional apparatus, thereby making it possible to reduce the torsion amount of the boss 5 twisted in the positive side and in the negative side with respect to the disc plates 7, 8. As a result, the torsional vibration attenuation apparatus according to the present embodiment can suppress the unpleasant feeling from being given to the driver.

Further, the magnitudes of the torsional property and the torsion angle at the time of the relative rotation of the disc plates 7, 8 and the boss 5 can be set to desired torsional property and torsion angle, respectively by adjusting the spring constant of the coil spring 4, the shape of the arm member 19, and the like.

The torsional vibration attenuation apparatus 1 according to the present embodiment has been explained as intervening between the internal combustion engine of the vehicle and the drive train with the transmission, however, the present invention is not limited to this embodiment but may include any type of torsional vibration attenuation apparatus provided in the drive train of the vehicle.

For example in the hybrid vehicle, the above torsional vibration attenuation apparatus 1 according to the present embodiment may be applied to one of above torsional vibration attenuation apparatuses such as a hybrid damper intervening between an output shaft of the internal combustion engine and a power splitting mechanism for splitting the power to an electric motor and a wheel side output shaft.

The above torsional vibration attenuation apparatus 1 according to the present embodiment may be applied to one of above torsional vibration attenuation apparatuses such as lock-up damper intervening between a lock-up clutch device forming part of a torque convertor and a gear set forming part of the transmission. Further, the above torsional vibration attenuation apparatus 1 according to the present embodiment may be provided between a differential case and a ring gear provided at the outer peripheral portion of the differential case.

The above torsional vibration attenuation apparatus 1 according to the present embodiment has been explained as being constructed to have the cam member 6 provided on the outer peripheral portion of the boss 5 and formed with the positive side cam surface section 6b and the negative side cam surface section 6c, however, the present invention is not limited to this type of the torsional vibration attenuation apparatus. For example, the torsional vibration attenuation apparatus 1 according to the present invention may be constructed to be provided at the radially outer end portions of the disc plates 7, 8 with a curved surface portion having a cam surface commensurate with the positive side cam surface section and the negative side cam surface section.

The previously mentioned embodiment has been raised as an example for explaining the invention, and thus the present invention is not limited to this embodiment. The scope of the present invention is required to be construed based on the claims. All the modifications, the alterations and the equivalents should be included within the scope of the invention defined by the claims.

As has been explained in the above description, the torsional vibration attenuation apparatus according to the present invention has such an excellent advantage to widen the range of the first rotation member and the second rotation member to suppress the relatively large torsional vibrations, as well as to prevent the first rotation member and the second rotation member from being twisted alternately in the positive side and in the negative side when the first rotation member and the second rotation member are displaced to their neutral positions. The torsional vibration attenuation apparatus according to the present invention is useful as a torsional vibration attenuation apparatus intervening between the internal combustion engine and the drive train of the vehicle and so constituted that the first rotation member and the second rotation member are relatively rotatably connected with each other through the resilient member so that the rotational torque is transmitted between the first rotation member and the second rotation member.

### {EXPLANATION OF REFERENCE NUMERALS}

1: torsional vibration attenuation apparatus
2: first rotation member
3: second rotation member
4: coil spring (resilient member)
5: boss (boss portion, second rotation member)
6: cam member (curved surface portion, second rotation member)
6a: curved surface portion
7, 8: disc plate (first rotation member)
10: clutch disc (first rotation member)
14, 15: accommodation window hole (accommodation portion)
14c, 15c: outer support edge portion (accommodation portion)
14d, 15d: inner support edge portion (accommodation portion)
16, 17: spring seat (retaining member, second rotation member)
18: pin (swing fulcrum portion)
19: arm member (torque transmission member)
21: input axis
26: roller member (roller element)
27: hysteresis mechanism

## Claims

1. A torsional vibration attenuation apparatus, comprising:
a first rotation member;
a second rotation member disposed in coaxial relationship with the first rotation member;
one or more resilient members each disposed between the first rotation member and the second rotation member to be resiliently deformed between the first rotation member and the second rotation member when the first rotation member and the second rotation member are relatively rotated with each other;
a curved surface portion provided on either one of the first rotation member and the second rotation member and having a predetermined curvature; and
a torque transmission member intervening between the first rotation member and the second rotation member and having one end portion held in contact with the curved surface portion and the other end portion held in engagement with one end portion in an extending direction of the resilient member, the torque transmission member being operative to transmit a rotation torque between the first rotation member and the second rotation member through the resilient deformation of the resilient member caused by the one end portion moving along the curved surface portion when the second rotation member is twisted with respect to the first rotation member in positive and negative sides,
wherein the curved surface portion has a first curvature section to be held in contact with the one end portion of the torque transmission member when the second rotation member is twisted with respect to the first rotation member in the positive side from a neutral position where the first rotation member and the second rotation member are not twisted with each other, and a second curvature section to be held in contact with the one end portion of the torque transmission member when the second rotation member is twisted with respect to the first rotation member in the negative side from the neutral position,
the first curvature section having a first curvature and the second curvature section having a second curvature, the second curvature being larger than the first curvature.

2. The torsional vibration attenuation apparatus as set forth in claim 1, in which the first rotation member and the second rotation member are mounted on a vehicle in such a manner that the first rotation member is transmitted with a rotation torque from an internal combustion engine, and the second rotation member is operative to output the rotation torque to a drive train, the second rotation member being twisted with respect to the first rotation member in the positive side from the neutral position at the acceleration time of the vehicle, while the second rotation member being twisted with respect to the first rotation member in the negative side from the neutral position at the deceleration time of the vehicle.

3. The torsional vibration attenuation apparatus as set forth in claim 1 or 2, in which the curved surface portion is constituted by a cam member integrally rotated with one of the first rotation member and the second rotation member and having a curved outer peripheral surface, and the torque transmission member being provided with an arm member having one end portion held in contact with the cam member and the other end portion held in engagement with one end portion in the extending direction of the resilient member and swingable around a swing fulcrum portion provided on either one of the first rotation member and the second rotation member between the one end portion of the torque transmission member and the other end portion of the torque transmission member.

4. The torsional vibration attenuation apparatus as set forth in any one of claim 1 to 3, which comprises two or more torque transmission members which are disposed in point symmetrical relationship with each other across the center axis of the first rotation member.

5. The torsional vibration attenuation apparatus as set forth in any one of claim 1 to 3, in which the second rotation member has an outer peripheral portion formed with the cam member and an inner peripheral portion provided with a boss member connected with the input shaft of a transmission provided in the drive train of the vehicle, and the first rotation member is provided with a pair of disc plates arranged at the both axial sides of the first rotation member to be secured to each other in axially spaced relationship with each other and formed with an accommodation portion circumferentially extending to accommodate therein the resilient member, and a pair of retaining members supporting the both circumferential end portions of the resilient member to have the resilient member supported on the both circumferential portions of the accommodation member, the other end portion of the arm member being held in engagement with the one circumferential end portion of the resilient member through either one of the retaining members.

6. The torsional vibration attenuation apparatus as set forth in claim 5, in which the other end portion of the arm member is provided with a roller element to be held in engagement with one of the retaining members through the roller element.

7. The torsional vibration attenuation apparatus as set forth in claim 5 or 6, which further comprises a hysteresis mechanism intervening between the cam member and the pair of the disc plates to have the cam member and the pair of the disc plates held in friction contact with each other.
